# FASCICULE DE BREVET EUROPEEN

(11) **EP 3 727 794 B1**
(45) Date de publication et mention de la délivrance du brevet: **29.12.2021**
(21) Numéro de dépôt: 18826769.4
(22) Date de dépôt: 28.11.2018
(51) Int. Cl.: B29C 49/48, B29C 49/06, B29L 31/00

(54) **FOND DE MOULE MONOBLOC A CIRCULATION FLUIDIQUE OPTIMISÉE**
EINSTÜCKIGER FORMBODEN MIT OPTIMIERTER FLÜSSIGKEITSZIRKULATION
ONE-PIECE MOULD BOTTOM WITH OPTIMISED FLUID CIRCULATION

(30) Priorité: 22.12.2017 FR 1762982
(43) Date de publication de la demande: 28.10.2020
(73) Titulaire: Sidel Participations, 76930 Octeville-sur-Mer (FR)
(72) Inventeur: SANDRINI, Maxime, 76930 Octeville-sur-mer (FR)
(74) Mandataire: Sidel Group
(86) Numéro de dépôt international: PCT/FR2018/053030
(87) Numéro de publication internationale: WO 2019/122564

(56) Documents cités:
- US-A1- 2006 170 138
- US-A1- 2016 325 483
- US-A1- 2016 332 356
- US-B2- 7 025 584

## Description

L'invention a trait au formage des récipients à partir d'ébauches en matière plastique, par soufflage ou étirage soufflage dans un moule à l'empreinte d'un modèle de récipient à former.

Le terme « ébauche » peut désigner une préforme (brute d'injection) ou un récipient intermédiaire ayant subi une opération préalable de soufflage à partir d'une préforme, et destiné à subir d'autres opérations de finition pour conduire au récipient final.

Un moule typique comprend, d'une part, une paroi latérale (à l'empreinte d'un corps du modèle de récipient) généralement subdivisée en deux demi-moules mutuellement articulés pour permettre l'introduction d'une ébauche, et, d'autre part, un fond de moule (à l'empreinte d'un fond du modèle de récipient) ordinairement positionné dans une ouverture ménagée au bas des demi-moules.

Un moule typique est régulé thermiquement, de sorte à assurer son maintien à une température stable permettant soit de refroidir les récipients en fin de formage (dans la majorité des cas), soit de les chauffer dans des cas plus rares où les récipients doivent être thermofixés pour pouvoir accueillir sans déformation un contenu chaud.

La régulation thermique est généralement conduite par circulation, dans le moule, d'un fluide caloporteur (sous forme gazeuse ou liquide : il s'agit ordinairement d'eau ou d'huile), au travers d'un circuit fluidique au moins partiellement formé dans les éléments du moule (demi-moules, fond de moule).

Il est courant d'usiner dans la masse du fond de moule un canal en serpentin dans lequel circule le fluide caloporteur, comme illustré par le brevet américain US 7 025 584 (Wenworth). Mais, dans cette architecture, le canal n'épouse que grossièrement la face de moulage définie par le fond de moule.

Il est connu, par ailleurs, de percer des canaux radiaux pour tenter de suivre le relief du fond de moule. Mais cette technique, illustrée notamment par le brevet américain US 5 971 740 (Rees) ne permet pas de réaliser des échanges thermiques homogènes.

Dans la pratique, ces deux architectures peuvent convenir (encore qu'imparfaitement) à des fonds de moules dont le relief est assez plat. En revanche, elles révèlent leurs limites dans le cas des fonds de moules dont l'empreinte présente un relief prononcé, par exemple une empreinte sphérique ou une empreinte pétaloïde. D'autres fonds de moule sont encore décrits dans les documents US2016/332356A1 et US2006/170138A1.

Un fond de moule à empreinte sphérique est prévu pour former un récipient à fond sphérique sur lequel est rapporté un socle (fixé typiquement par encliquetage, collage ou soudage).

Quant à un fond à empreinte pétaloïde, il comprend une alternance de nervures (correspondant à des vallées sur le fond du récipient) et de réserves en creux (correspondant à des pieds sur le fond du récipient).

Dans ces deux cas, l'usinage d'un canal en serpentin ou le perçage de canaux radiaux n'est pas suffisant pour assurer une régulation thermique efficace du fond de moule, sur lequel on note de forts gradients thermiques, qui révèlent une hétérogénéité des échanges thermiques, au détriment de la qualité du récipient final.

Il a récemment été proposé, cf. la demande WO 2015/092196 (Sidel) de réaliser par fabrication additive un fond de moule monobloc, lequel fond de moule intègre une cavité, qui épouse le relief de l'empreinte définie par le fond de moule et dans laquelle circule un fluide caloporteur.

Les performances de ce fond de moule, en termes de régulation thermique, sont très supérieures à celles des fonds de moule précités. Cependant des essais conduits en régulation thermique froide avec un fond de moule conforme à la demande précitée ont révélé (par thermographie infrarouge) que certaines zones du fond du récipient, situées dans une zone médiane distante (mais pas trop) du centre et à l'endroit des pieds, présentent une température encore trop élevée, signe d'un refroidissement insuffisant. De fait, les zones incriminées sont peu étirées lors du formage et présentent en conséquence, sur le récipient final, une épaisseur importante qui rend difficile leur refroidissement.

On comprend donc qu'il convient de perfectionner ce fond de moule monobloc pour le rendre plus efficace en régulation thermique, et plus précisément pour accélérer le refroidissement de certaines zones difficiles correspondant sur le fond du récipient à des zones épaisses.

Plus concrètement, un objectif est de favoriser l'écoulement du fluide caloporteur vers ces zones difficiles pour y accroître le débit et ainsi y optimiser les échanges de chaleur avec le récipient en cours de formage.

A cet effet, il est proposé, en premier lieu, un fond de moule destiné à un moule pour la fabrication de récipients par soufflage ou étirage soufflage à partir d'ébauches en matière plastique, ce fond de moule s'étendant autour d'un axe central et comprenant :
- une paroi de moulage formée d'un seul bloc et qui définit une surface de moulage ;
- une cavité formée à l'intérieur de la paroi de moulage, cette cavité ayant une zone centrale située au voisinage de l'axe central du fond de moule, une zone périphérique, située à distance de l'axe central, et une zone médiane, intermédiaire entre la zone centrale et la zone périphérique ;
- un conduit central d'alimentation de la cavité en fluide caloporteur, qui débouche dans la zone centrale par une ou plusieurs ouverture(s) centrale(s) ;
- au moins un conduit d'évacuation du fluide caloporteur à partir de la cavité, dans lequel débouche la zone périphérique ;
ce fond de moule étant caractérisé en ce qu'il comprend une dérivation qui met en communication directe le conduit central avec la zone médiane de la cavité en contournant la zone centrale.

Grâce à cette dérivation, la zone médiane de la cavité, située au droit de zones de la surface de moulage qui nécessitent un échange thermique important, peut être directement alimentée en fluide caloporteur prélevé directement dans le conduit central d'alimentation. Cela permet d'améliorer la qualité du récipient final.

Diverses caractéristiques supplémentaires peuvent être prévues, seules ou en combinaison. Ainsi, par exemple :
- le conduit central d'alimentation est délimité radialement par une paroi latérale par laquelle la dérivation s'ouvre, par une embouchure intérieure, dans le conduit central ;
- le fond de moule est pourvu de raidisseurs qui contreventent l'embouchure intérieure de la dérivation ;
- chaque raidisseur présente en section horizontale un profil d'ailette, orienté radialement ;
- la cavité est délimitée par une peau interne qui définit la surface de moulage, et par une peau externe ;
- la peau interne présente une épaisseur comprise entre 0,2 mm et 5 mm, et par exemple d'environ 0,5 mm ;
- le fond de moule comprend un réseau d'étais qui relient la peau interne et la peau externe.

Selon un premier mode de réalisation, où la surface de moulage présente un relief à l'empreinte d'un récipient pétaloïde, et définit une alternance de nervures et de réserves en creux, la dérivation comprend par exemple :
- des canaux primaires de dérivation qui mettent chacun en communication le conduit central d'alimentation avec une partie de la zone médiane de la cavité située au niveau d'une réserve en creux ;
- des canaux secondaires de dérivation qui mettent chacun en communication le conduit central d'alimentation avec une partie de la zone médiane de la cavité située au niveau d'une nervure.

Les canaux primaires et les canaux secondaires sont par de préférence disposés en alternance autour du conduit central d'alimentation.

Selon un deuxième mode de réalisation, la dérivation se présente avantageusement sous forme d'un conduit unitaire entourant l'axe central.

Il est proposé, en deuxième lieu, un moule pour la fabrication de récipients à partir d'ébauches en matière plastique, qui comprend un tel fond de moule.

D'autres objets et avantages de l'invention apparaîtront à la lumière de la description d'un mode de réalisation, faite ci-après en référence aux dessins annexés dans lesquels :
- la **FIG.1** est une vue en coupe d'un moule intégrant un fond de moule monobloc à circulation fluidique optimisée ;
- la **FIG.2** est une vue en perspective, par-dessus, du fond de moule, dans une version à empreinte pétaloïde ;
- la **FIG.3** est une vue de dessus du fond de moule de la **FIG.2** ;
- la **FIG.4** est une vue en coupe, en perspective, du fond de moule, selon le plan de coupe IV-IV de la **FIG.3** ;
- la **FIG.5** est une vue de détail en coupe et en perspective par-dessus, d'un secteur du fond de moule, prise dans le médaillon de détail V de la **FIG.4** ;
- la **FIG.6** est une vue de détail en coupe et en perspective, par-dessous, du secteur du fond de moule de la **FIG.5** ;
- la **FIG.7** est une section transversale du fond de moule, selon le plan de coupe VII-VII de la **FIG.3** ;
- les **FIG.8****.****1****,** **FIG.8****.****2****,** **FIG.8****.****3****,** **FIG.8****.****4****,** **FIG.8****.****5** et **FIG.8****.****6** (désignées globalement par **FIG.8**) sont des coupes horizontales d'un secteur du fond de moule à empreinte pétaloïde des **FIG.2** à **FIG.7****,** faites dans des plans horizontaux superposés équidistants ;
- la **FIG.9** est une vue en coupe, en perspective, d'un fond de moule monobloc à circulation fluidique optimisée, pour une autre forme d'empreinte du fond de récipient ;
- la **FIG.10** est une vue de détail du fond de la **FIG.9****,** prise dans le médaillon X.

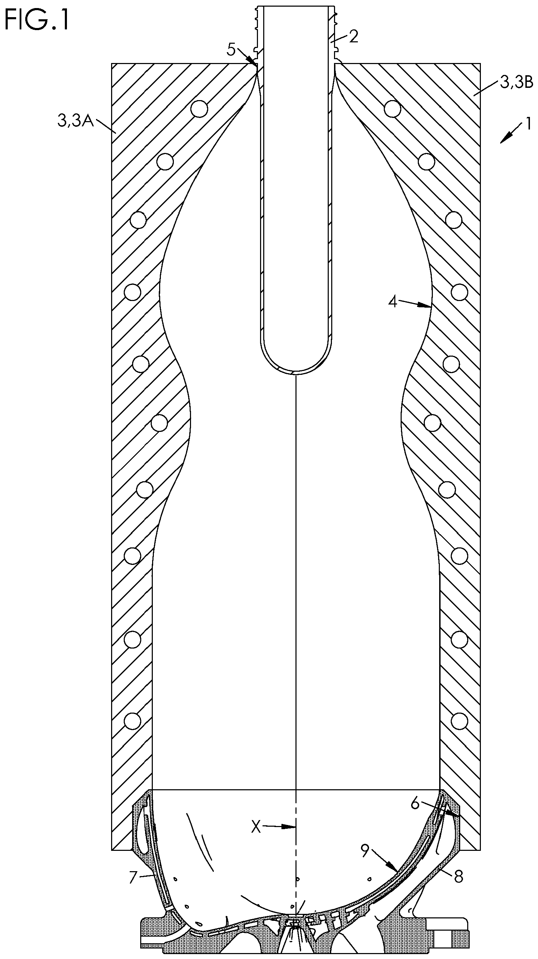

Sur la **FIG.1** est représenté un moule **1** pour le formage d'un récipient à partir d'une ébauche **2** en matière plastique, par soufflage ou étirage soufflage.

L'ébauche **2** peut (comme dans l'exemple illustré sur la **FIG.1**) être une préforme, obtenue par injection d'une matière plastique (tel que du PET), ou un récipient intermédiaire ayant subi une première opération de soufflage à partir d'une préforme et destiné à subir une ou plusieurs opérations de finition pour être transformé en récipient final.

Le moule **1** comprend, en premier lieu, une paroi **3** latérale qui définit une surface **4** de moulage en relief à l'empreinte d'un corps du récipient à former. Dans l'exemple illustré, la paroi **3** latérale comprend deux demi-moules **3A, 3B** mutuellement articulés autour d'un axe vertical commun, entre une position ouverte du moule **1,** dans laquelle les demi-moules **3A, 3B** sont écartés l'un de l'autre, et une position fermée, dans laquelle les demi-moules **3A, 3B** sont appliqués l'un contre l'autre. La position ouverte permet l'introduction de l'ébauche **2** dans le moule **1** et, inversement, l'évacuation du récipient formé, et la position fermée détermine l'empreinte du récipient et en permet ainsi le formage, par soufflage ou étirage-soufflage de l'ébauche **2.**

La paroi **3** latérale définit une ouverture **5** supérieure, au travers de laquelle la préforme **2** s'étend pendant le formage du récipient, et une ouverture **6** inférieure opposée.

Le moule **1** comprend, en deuxième lieu, un fond **7** de moule. Le fond **7** de moule est avantageusement monté sur un support appelé sellette. Le fond **7** de moule est, avec la sellette, monté en translation suivant une direction axiale entre une position basse, qu'il occupe en position ouverte du moule **1** pour faciliter l'évacuation d'un récipient formé, et une position haute, qu'il occupe en position fermée et dans laquelle il obture l'ouverture **6** inférieure.

Le fond **7** de moule s'étend autour d'un axe **X** central (confondu avec un axe central du récipient à former) et comprend une paroi **8** de moulage, qui définit une surface **9** de moulage à l'empreinte d'au moins une partie d'un fond du récipient à former.

Le fond **7** de moule désigne le composant fonctionnel, avec ses parties pleines et ses parties creuses, permettant d'obtenir le formage du fond du récipient tout en faisant circuler un fluide caloporteur destiné à en assurer la régulation thermique.

La paroi **8** de moulage désigne la partie pleine du fond **7** de moule, c'est-à-dire l'endroit du fond **7** de moule où se trouve la matière constitutive du fond **7** de moule.

La paroi **8** de moulage est formée d'un seul bloc (ou d'un seul tenant), c'est-à-dire qu'elle se présente sous forme d'un élément unitaire, obtenu par un procédé de fabrication dépourvu d'étape intermédiaire d'assemblage (des exemples seront fournis ci-après). En d'autres termes, la matière de la paroi **8** de moulage s'étend de manière continue, sans plan de joint entre différentes parties.

Le fond **7** de moule comprend une cavité **10** formée à l'intérieur de la paroi **8** de moulage. Cette cavité **10** est destinée à permettre la circulation d'un fluide caloporteur assurant un échange thermique entre le récipient en cours de formation et la paroi **8** de moulage.

Le fluide caloporteur peut notamment être de l'eau ou de l'huile. Il est destiné à véhiculer des calories pour assurer une régulation thermique de la surface **9** de moulage :
- soit pour la maintenir à une température plus basse (typiquement 10°C) que la température du fond du récipient (cas, le plus courant, du refroidissement),
- soit pour la maintenir à une température plus haute (typiquement 140°C) que la température du fond du récipient (cas particulier de la chauffe, notamment pour assurer une thermofixation de la matière).

La cavité **10** présente :
- une zone **11** centrale, située au voisinage de l'axe **X** central ;
- une zone **12** périphérique, située à distance de l'axe **X** central ;
- et une zone **13** médiane, intermédiaire entre la zone **11** centrale et la zone **12** périphérique.

Il n'existe pas nécessairement de séparation nette entre les différentes zones **11, 12, 13.** Cependant elles correspondent, lorsque projetées (géométriquement) sur le fond du récipient, à des zones sur celui-ci qui offrent des inerties thermiques différentes en raison de leurs épaisseurs de matière différentes.

En effet, au voisinage de l'axe **X,** le fond du récipient présente une épaisseur importante car la matière y est peu étirée (de fait, l'épaisseur de matière y est habituellement supérieure à 1 mm). A contrario, à distance de l'axe **X** central, c'est-à-dire à la périphérie, le fond du récipient présente une épaisseur faible car la matière y est très étirée (de fait, l'épaisseur de matière est habituellement de l'ordre du dixième de millimètre).

Entre ces deux zones, le fond du récipient présente une épaisseur qui varie, et plus précisément qui diminue radialement de l'intérieur (au voisinage de l'axe central du récipient) vers l'extérieur.

En pratique, on considère ici que :
- la zone **11** centrale de la cavité **10** s'étend à l'intérieur d'un diamètre inférieur ou égal à 15% du diamètre hors tout de la surface **9** de moulage et, de préférence, inférieur ou égal à 12% dudit diamètre (lorsque mesurée dans un plan perpendiculaire à l'axe **X** central) ;
- la zone **13** médiane de la cavité **10** s'étend au-delà de la zone **11** centrale et à l'intérieur d'un diamètre compris entre 12% et 40% du diamètre hors tout de la surface **9** de moulage ;
- la zone **12** périphérique s'étend au-delà de la zone **13** médiane.

Selon un mode de réalisation illustré sur les dessins, la cavité **10** est délimitée par une peau **14** interne, qui définit la surface **9** de moulage, et par une peau **15** externe. La peau **14** interne est relativement mince, son épaisseur étant comprise entre 0,2 mm et 5 mm, et par exemple de 0,5 mm. La peau **14** interne est par ailleurs d'épaisseur sensiblement constante.

Le fond **7** de moule comprend avantageusement un réseau d'étais **16** qui relient la peau **14** interne et la peau **15** externe, qui ont pour fonction de renforcer le fond **7** de moule.

Selon un mode préféré de réalisation, le fond **7** de moule est percé d'évents **17** de décompression qui traversent la peau **14** interne, la peau **15** externe et la cavité **10** pour mettre en communication le volume interne du fond **7** de moule avec l'extérieur de celui-ci et ainsi faciliter l'évacuation de l'air qui se trouve comprimé entre la surface **9** de moulage et le fond du récipient par le gonflement de l'ébauche lors du formage du récipient.

Le fond **7** de moule comprend en outre :
- un conduit **18** central d'alimentation de la cavité **10** en fluide caloporteur ;
- au moins un conduit **19** d'évacuation du fluide caloporteur à partir de la cavité **10,** dans lequel débouche la zone **12** périphérique.

Le conduit **18** central débouche dans la zone **11** centrale de la cavité **10** par une ou plusieurs ouvertures **20** centrales.

Par ailleurs, le conduit **18** central débouche, sur une face **21** inférieure (de préférence plane) du fond **7** de moule par un orifice **22** d'entrée.

En outre, le conduit **18** central d'alimentation est délimité, radialement, par une paroi **23** latérale. Dans les exemples illustrés, cette paroi **23** latérale est globalement cylindrique.

Le fluide canalisé par la paroi **23** latérale traverse l'ouverture ou les ouvertures **20** centrales et envahit la zone **11** centrale de la cavité **10,** ce qui assure l'échange thermique avec la portion de la surface **9** de moulage (et donc avec la portion du récipient) qui s'étend au droit de la zone **11** centrale. Le fluide se disperse ensuite radialement à partir de la zone **11** centrale vers la zone **12** périphérique, en traversant la zone **13** médiane. Lorsque le fluide injecté dans la cavité **10** par la zone **11** centrale parvient dans la zone **13** médiane, il présente une capacité d'échange thermique amoindrie en raison des échanges thermiques déjà réalisés dans la zone **11** centrale.

C'est pourquoi, pour maintenir une bonne capacité d'échange thermique du fluide caloporteur au niveau de la zone **13** médiane, le fond **7** de moule comprend une dérivation **24,** qui met en communication directe le conduit **18** central d'alimentation avec la zone **13** médiane de la cavité **10,** en contournant la zone **11** centrale. Ainsi, du fluide est prélevé dans le conduit **18** central d'alimentation pour être injecté directement dans la zone **13** médiane. De la sorte, la capacité d'échange thermique globale du fluide est accrue dans la zone **13** médiane, au bénéfice de la régulation thermique de la surface 9 de moulage (et donc du récipient) à cet endroit.

Selon un mode préféré de réalisation, la section de passage de la dérivation **24,** mesurée à l'embouchure, est supérieure ou égale à 50% de la section de passage du conduit central en amont de l'embouchure, de sorte que plus de la moitié du flux de fluide caloporteur est prélevé par la dérivation. Comme on le lira plus tard, la dérivation est subdivisée en canaux **24A** primaires et en canaux **24B** secondaires et c'est la somme des sections de l'ensemble de ces canaux **24A, 24B** qui est supérieure ou égale à 50% de la section de passage du conduit central en amont de l'embouchure.

Comme on le voit sur les illustrations, la dérivation **24** s'ouvre, par une embouchure **25** intérieure, dans le conduit **18** central d'alimentation. Pour assurer son intégrité et sa tenue mécanique, le fond **7** de moule est avantageusement pourvu de raidisseurs **26** qui contreventent l'embouchure **25** intérieure de la dérivation **24.**

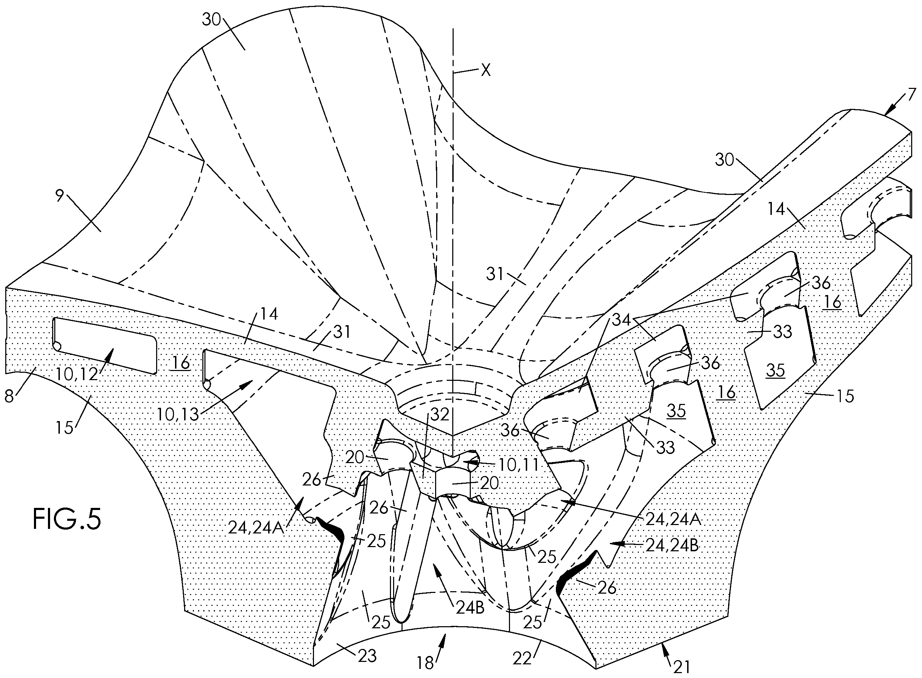

Comme on le voit également sur les dessins, et plus particulièrement sur les **FIG.5****,** **FIG.6** et **FIG.10****,** chaque raidisseur **26** présente en section horizontale un profil d'ailette, orienté radialement. Ce profil a l'avantage d'opposer une faible résistance à l'écoulement du fluide caloporteur.

Le fluide caloporteur injecté dans la zone **13** médiane par la dérivation **24** se disperse ensuite vers la zone **12** périphérique, où il assure un échange thermique supplémentaire, avant d'être déversé dans un collecteur **27** périphérique par des orifices **28** radiaux pratiqués dans la peau **15** externe, puis acheminé par le conduit **19** d'évacuation.

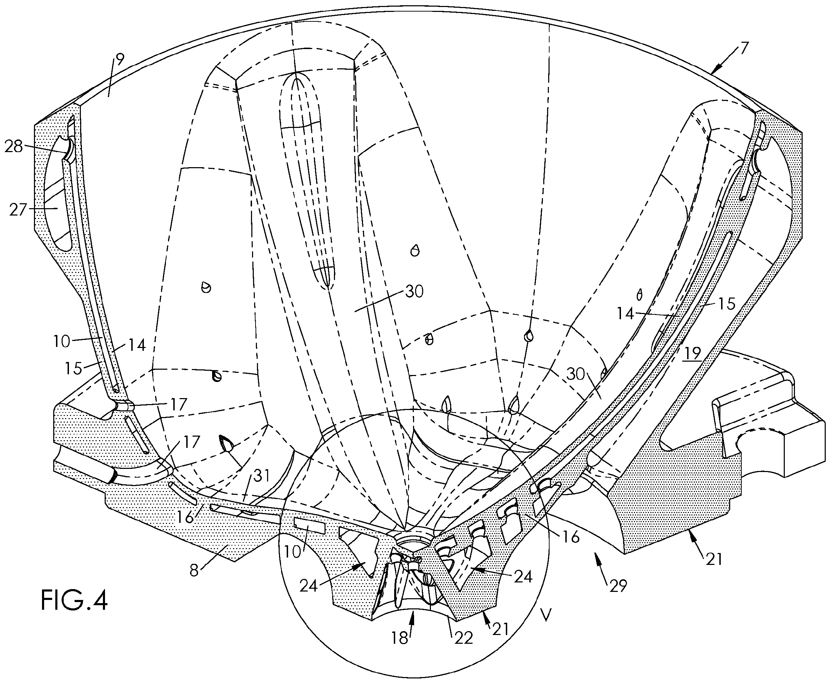

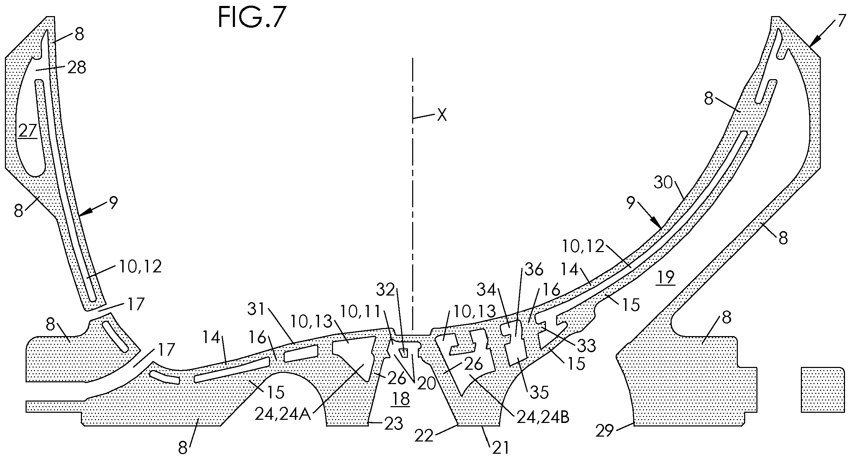

Comme illustré sur les **FIG.4****,** **FIG.7** et **FIG.9****,** le conduit **19** d'évacuation débouche sur la face **21** inférieure du fond 7 de moule par un orifice **29** de sortie.

Par conséquent, le conduit **18** central d'alimentation et le conduit **19** d'évacuation débouchent tous deux sur la face **21** inférieure du fond **7** de moule, respectivement par l'orifice **22** d'entrée et par l'orifice **29** de sortie. Cette disposition est avantageuse car elle permet de brancher sur le fond **7** de moule un flexible d'amenée du fluide caloporteur pourvu d'une fiche de connexion rapide assurant à la fois l'alimentation en fluide caloporteur et l'évacuation de celui-ci.

La fabrication du fond **7** de moule, avec sa cavité **10,** peut être réalisée par fabrication directe, de préférence par la technique dite de la construction laser additive directe, traduction de l'expression anglo-saxonne Direct Metal Laser Sintering (DMLS).

Cette technique consiste, à partir d'un modèle tridimensionnel du fond **7** de moule généré ou chargé dans un environnement de Conception assistée par ordinateur (CAO), à déposer, dans une enceinte, des couches successives d'une poudre métallique (d'une épaisseur typique comprise entre 10 µm et 100 µm) et à effectuer après chaque dépôt une fusion locale de la poudre, au moyen d'un laser de puissance, dans les zones destinées à former la matière de la paroi **8** de moulage.

Après le dépôt de la dernière couche, le fond **7** de moule est débarrassé de la poudre résiduelle non fondue, celle-ci étant récupérée pour être recyclée. Cette technique de fabrication peut être mise en œuvre au sein d'une machine telle que celle commercialisée par la société EOS sous la dénomination commerciale EOSINT M 280.

Le matériau employé peut être un acier ou un aluminium (éventuellement alliés). Si le fluide caloporteur est de l'eau, on emploiera de préférence, pour la fabrication du fond **7** de moule, un acier inoxydable.

Deux modes de réalisation du fond **7** de moule sont illustrés, dont la plupart des caractéristiques communes ont été décrites ci-dessus.

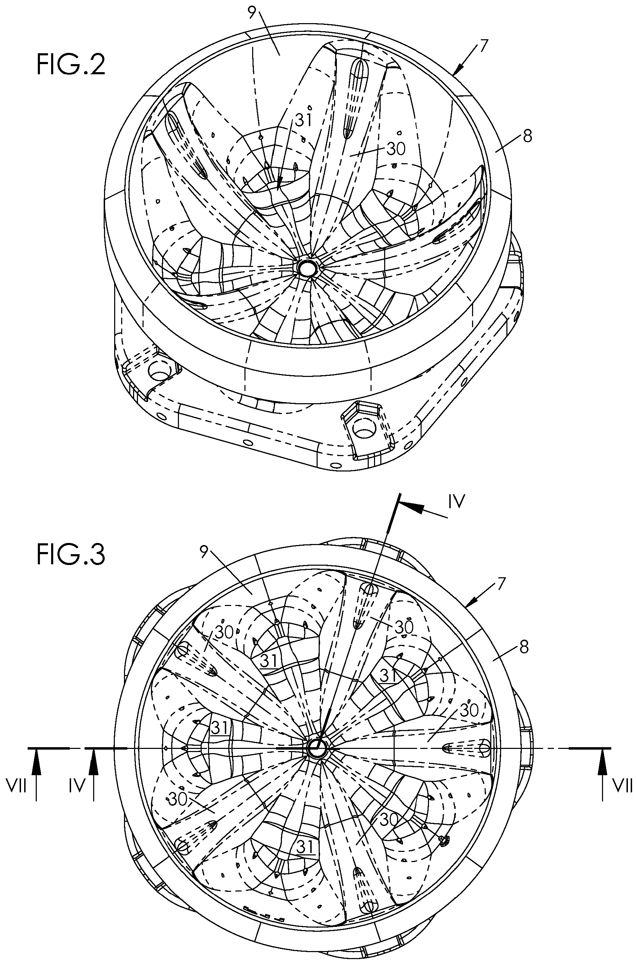

Dans le premier mode de réalisation, illustré sur les **FIG.2** à **FIG.8****,** le fond **7** de moule est destiné au formage d'un fond de récipient pétaloïde, conçu notamment pour résister aux pressions générées par les boissons carbonatées.

La surface **9** de moulage présente à cet effet un relief à l'empreinte d'un tel fond de récipient, et définit une alternance de nervures **30** (correspondant sur le fond du récipient à des vallées) et de réserves **31** en creux (correspondant sur le fond du récipient à des pieds).

Dans ce premier mode de réalisation, le conduit **18** central d'alimentation se termine, du côté de la zone **11** centrale de la cavité **10,** par une paroi **32** d'extrémité qui s'étend transversalement (c'est-à-dire perpendiculairement à l'axe **X** central) et dans laquelle sont pratiquées des ouvertures **20** centrales qui mettent en communication le conduit **18** central et la zone **11** centrale de la cavité **10.**

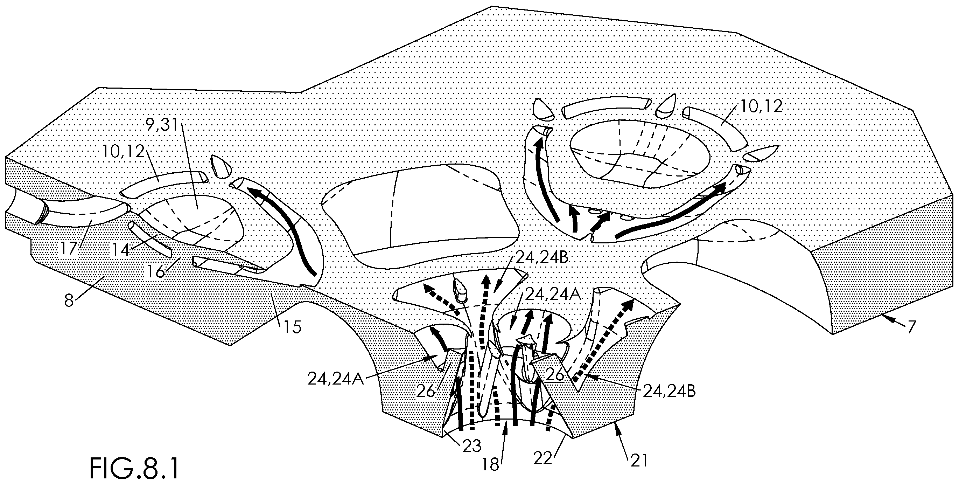

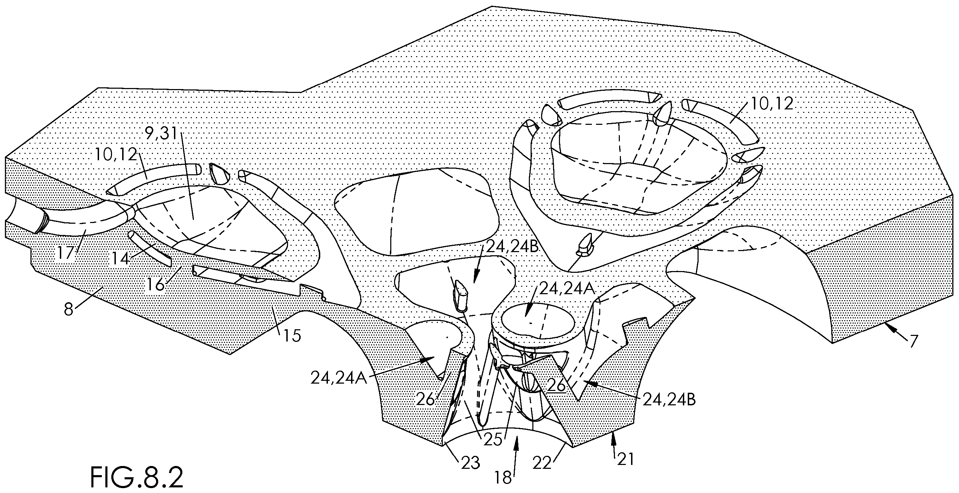

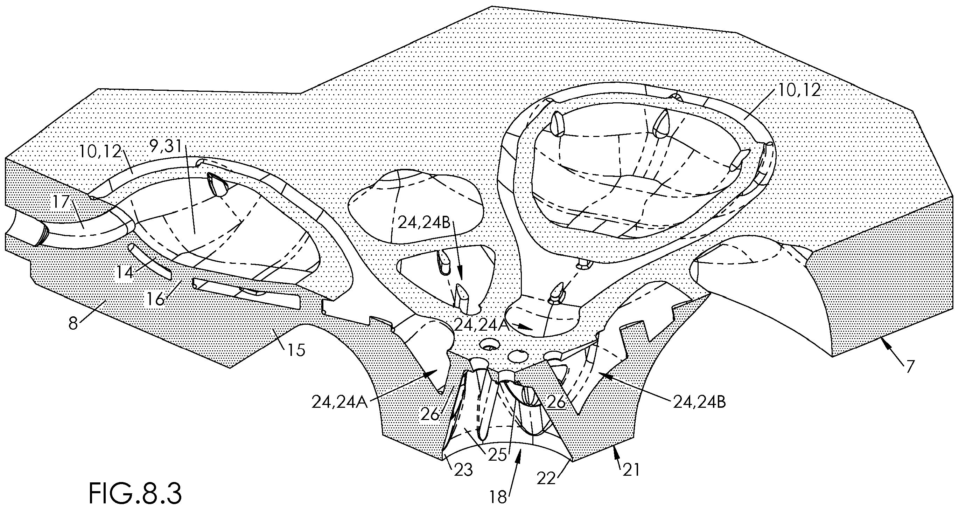

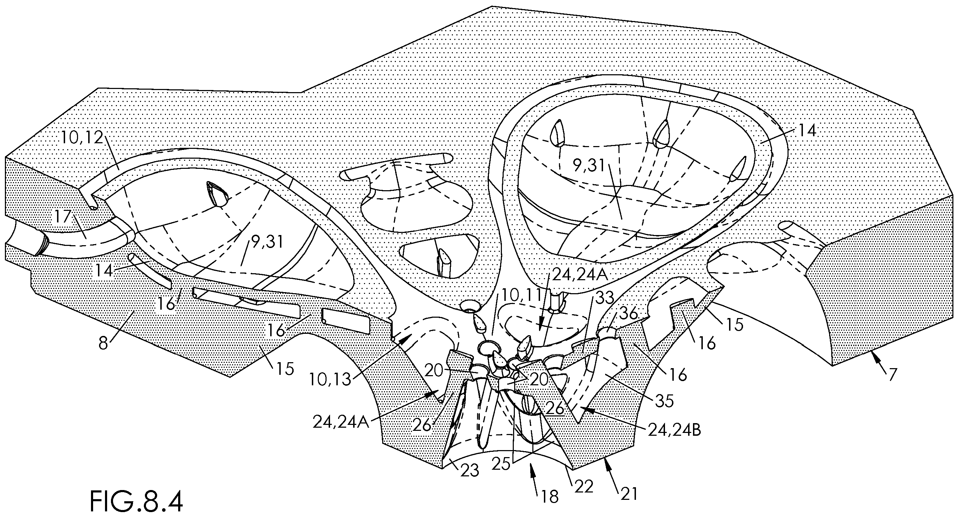

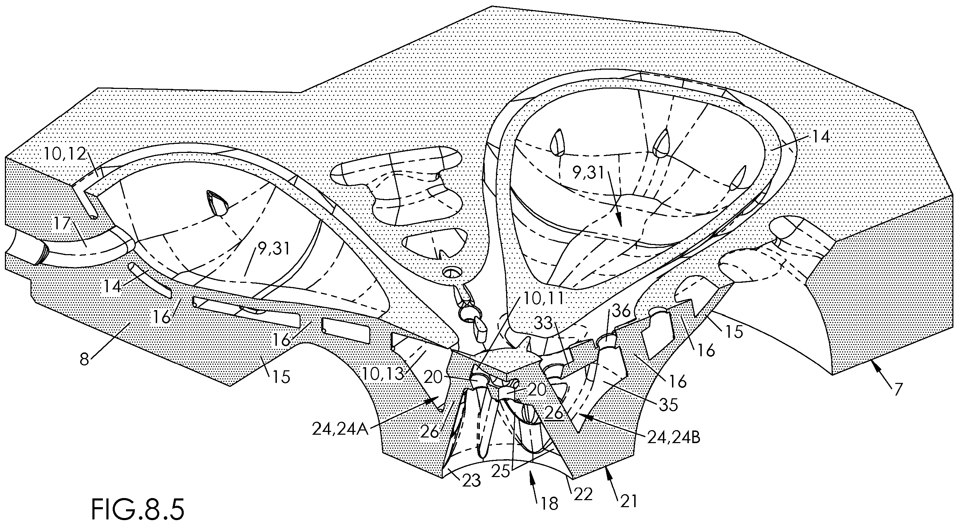

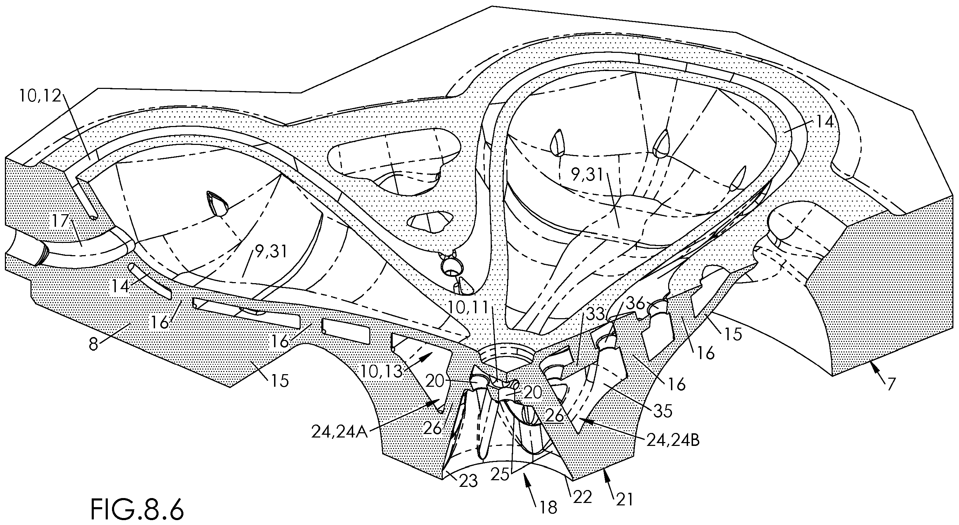

Dans ce cas, et comme illustré sur la **FIG.8****,** la dérivation **24** est subdivisée, et comprend :
- des canaux **24A** primaires de dérivation, qui mettent chacun en communication le conduit **18** central d'alimentation avec une partie de la zone **13** médiane située au niveau d'une réserve **31** en creux ;
- des canaux **24B** secondaires de dérivation qui mettent chacun en communication le conduit **18** central d'alimentation avec une partie de la zone **13** médiane située au niveau d'une nervure **30.**

Dans ce mode de réalisation, la somme des sections (prises à leur embouchure) de l'ensemble des canaux **24A, 24B** est supérieure ou égale à 50% (et ici de l'ordre de 62,5%) de la section de passage du conduit **18** central d'alimentation en amont de l'embouchure **25** intérieure.

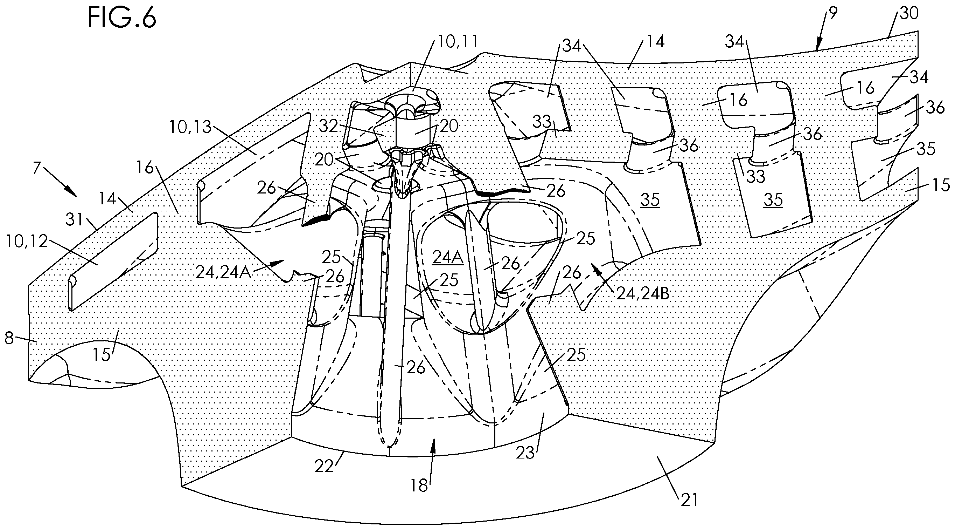

Comme illustré sur la **FIG.6****,** les canaux **24A** primaires et les canaux **24B** secondaires sont de préférence disposés en alternance autour du conduit **18** central d'alimentation, ce qui correspond à la disposition alternée des nervures **30** et des réserves **31** en creux.

Dans l'exemple illustré, chaque canal **24A, 24B** est, à l'embouchure **25** intérieure, barré verticalement d'un raidisseur **26.** Sur les **FIG.5** et **FIG.6****,** les raidisseurs **26** sont partiellement arrachés afin de mettre en évidence des éléments de structure qui se trouvent derrière.

Comme on le voit tout particulièrement sur les **FIG.5** et **FIG.6** **et** **FIG.7****,** le fond **7** de moule présente, au niveau des nervures **30,** un voile **33** qui s'étend entre la peau **14** interne et la peau **15** externe. Dans ce cas, la cavité **10** y est subdivisée en une chambre **34** supérieure, qui s'étend entre la peau **14** interne et le voile **33,** et une chambre **35** inférieure, qui s'étend entre le voile **33** et la peau **15** externe.

La chambre **34** supérieure et la chambre **35** inférieure communiquent par des percements **36.** De la sorte, le fluide prélevé dans le conduit **18** central d'alimentation par les canaux **24B** secondaires de dérivation est injecté d'abord dans la chambre **35** inférieure, d'où il diffuse vers la chambre **34** supérieure par les percements **36,** avant d'être canalisé vers la zone **12** périphérique de la cavité **10.**

Dans la zone des nervures **30** située au droit de la zone **13** médiane de la cavité **10,** la matière est moins étirée par le relief des nervures **30,** et est donc plus épaisse. En revanche, dans la zone des réserves **31** en creux située au droit de la zone **13** médiane de la cavité **10,** la matière du récipient en formation, plus étirée, est relativement plus fine.

La circulation du fluide transitant par les canaux **24A** primaires est illustrée par les flèches en traits gras continus sur la **FIG.8****.****1****.**

La circulation du fluide transitant par les canaux **24B** secondaires est illustrée par les flèches en traits gras pointillés sur la **FIG.8****.****1****.**

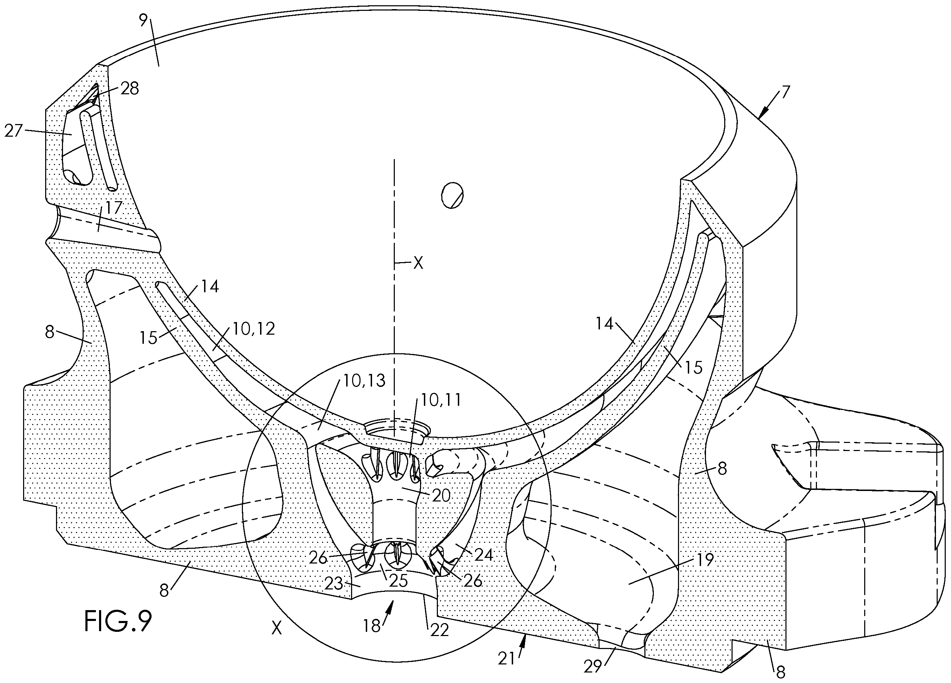

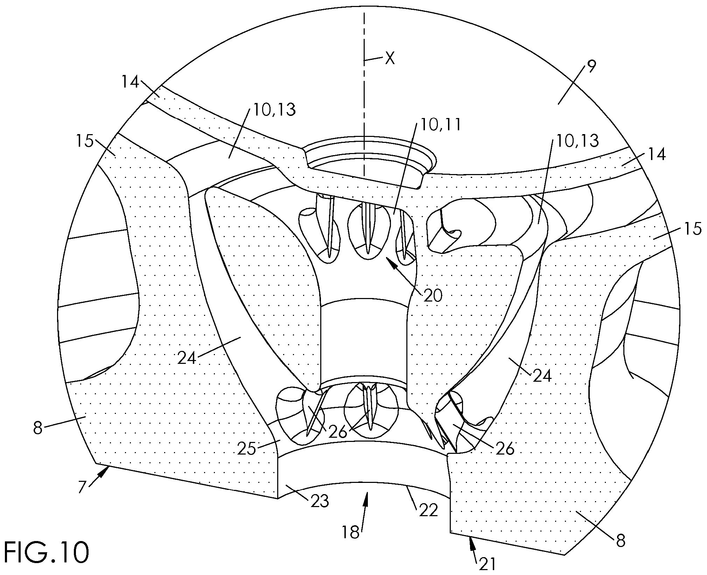

On a illustré un deuxième mode de réalisation sur les **FIG.9** et **FIG.10****,** pour montrer que l'architecture qui vient d'être décrite peut s'appliquer à un fond **7** de moule définissant une surface **9** de moulage dont le relief est moins marqué que dans le cas pétaloïde.

L'exemple illustré est un cas extrême où la surface **9** de moulage est lisse. Dans ce cas, et comme on le voit bien sur la **FIG.10****,** le conduit **18** central d'alimentation débouche dans la zone **11** centrale de la cavité **10** par une unique ouverture **20** centrale.

Par ailleurs, et comme illustré sur la **FIG.9****,** la dérivation **24** se présente avantageusement sous forme d'un conduit unitaire entourant l'axe **X** central.

Dans l'exemple illustré, la dérivation **24** présente même une symétrie de révolution autour de l'axe **X** central. L'embouchure **25** intérieure s'étend dans ce cas de manière annulaire autour du conduit **18** central d'alimentation.

De la sorte, le fluide prélevé dans le conduit **18** central d'alimentation en amont de l'ouverture **20** centrale est distribué uniformément sur la zone **13** médiane de la cavité **10.**

Dans l'exemple illustré, la dérivation **24** présente, en section transversale, un profil parabolique. Pour maintenir une vitesse de flux sensiblement constant, la section de passage est, dans la dérivation **24,** sensiblement constante suivant la hauteur, tandis que l'extension radiale de la dérivation **24** augmente. C'est pourquoi la dérivation **24** paraît se rétrécir de l'intérieur vers l'extérieur lorsqu'observée en section, comme sur la **FIG.10****.**

Dans ce mode de réalisation, la section de passage de la dérivation **24,** mesurée à l'embouchure **25** intérieure, est avantageusement supérieure ou égale à 70% (et ici de l'ordre de 75%) de la section de passage du conduit central en amont de l'embouchure.

Comme on le voit par ailleurs sur la **FIG.10****,** le fond **7** de moule comprend une série de raidisseurs **26** régulièrement espacés, répartis sur l'embouchure **25** intérieure annulaire.

Quant au conduit **19** d'évacuation, il s'étend, dans ce deuxième mode de réalisation, de manière annulaire autour de et sous la peau **15** externe, pour déboucher sur la face **21** inférieure du fond **7** de moule par un orifice **29** de sortie unique.

Quel que soit le mode de réalisation retenu, le fluide amené par le conduit central d'alimentation est séparé en un premier flux central injecté axialement dans la zone **11** centrale par la (ou les) ouverture(s) **20** centrale(s), et en un deuxième flux dévié latéralement dans la dérivation **24** pour être injecté directement dans la zone **13** médiane. Il en résulte une meilleure régulation thermique de la zone **13** médiane, et donc un récipient final dont la matière est mieux régulée thermiquement, au bénéfice des performances mécaniques du récipient.

## Revendications

1. Fond (**7**) de moule destiné à un moule (**1**) pour la fabrication de récipients par soufflage ou étirage soufflage à partir d'ébauches (**2**) en matière plastique, ce fond (**7**) de moule s'étendant autour d'un axe (**X**) central et comprenant :
- une paroi (**8**) de moulage formée d'un seul bloc et qui définit une surface (**9**) de moulage ;
- une cavité (**10**) formée à l'intérieur de la paroi (**8**) de moulage, cette cavité (**10**) ayant une zone (**11**) centrale située au voisinage de l'axe (**X**) central du fond (**7**) de moule, une zone (**12**) périphérique, située à distance de l'axe (**X**) central, et une zone (**13**) médiane, intermédiaire entre la zone (**11**) centrale et la zone (**12**) périphérique ;
- un conduit (**18**) central d'alimentation de la cavité (**10**) en fluide caloporteur, qui débouche dans la zone (**11**) centrale par une ou plusieurs ouverture(s) (**20**) centrale(s) ;
- au moins un conduit (**19**) d'évacuation du fluide caloporteur à partir de la cavité (**10**), dans lequel débouche la zone (**12**) périphérique ;
ce fond (**7**) de moule étant **caractérisé en ce qu'**il comprend une dérivation (**24**) qui met en communication directe le conduit (**18**) central avec la zone (**13**) médiane de la cavité (**10**) en contournant la zone (**11**) centrale.

2. Fond (**7**) de moule selon la revendication 1, **caractérisé en ce que** le conduit (**18**) central d'alimentation est délimité radialement par une paroi (**23**) latérale par laquelle la dérivation (**24**) s'ouvre, par une embouchure (**25**) intérieure, dans le conduit (**18**) central.

3. Fond (**7**) de moule selon la revendication 1 ou la revendication 2, **caractérisé en ce qu'**il est pourvu de raidisseurs (**26**) qui contreventent l'embouchure (**25**) intérieure de la dérivation (**24**).

4. Fond (**7**) de moule selon la revendication 3, **caractérisé en ce que** chaque raidisseur (**26**) présente en section horizontale un profil d'ailette, orienté radialement.

5. Fond (**7**) de moule selon l'une des revendications précédentes, dans lequel la cavité (**10**) est délimitée par une peau (**14**) interne qui définit la surface (**9**) de moulage, et par une peau (**15**) externe.

6. Fond (**7**) de moule selon la revendication 5, dans lequel la peau (**14**) interne présente une épaisseur comprise entre 0,2 mm et 5 mm.

7. Fond (**7**) de moule selon la revendication 5 ou la revendication 6, qui comprend un réseau d'étais (**16**) qui relient la peau (**14**) interne et la peau (**15**) externe.

8. Fond (**7**) de moule selon l'une des revendications précédentes, dans lequel la surface (**9**) de moulage présente un relief à l'empreinte d'un récipient pétaloïde, et définit une alternance de nervures (**30**) et de réserves (**31**) en creux.

9. Fond (**7**) de moule selon la revendication 8, dans lequel la dérivation (**24**) comprend :
- des canaux (**24A**) primaires de dérivation qui mettent chacun en communication le conduit (**18**) central d'alimentation avec une partie de la zone (**13**) médiane de la cavité (**10**) située au niveau d'une réserve (**31**) en creux ;
- des canaux (**24B**) secondaires de dérivation qui mettent chacun en communication le conduit (**18**) central d'alimentation avec une partie de la zone (**13**) médiane de la cavité (**10**) située au niveau d'une nervure (**30**).

10. Fond (**7**) de moule selon la revendication 9, dans lequel les canaux (**24A**) primaires et les canaux (**24B**) secondaires sont disposés en alternance autour du conduit (**18**) central d'alimentation.

11. Fond (**7**) de moule selon l'une des revendications 1 à 7, dans lequel la dérivation (**24**) se présente sous forme d'un conduit unitaire entourant l'axe (**X**) central.

12. Moule (**1**) pour la fabrication de récipients à partir d'ébauches (**2**) en matière plastique, qui comprend au moins un fond (**7**) de moule selon l'une des revendications précédentes.

## Patentansprüche

1. Formboden (7) für eine Form (1) zur Fertigung von Behältern durch Blasen oder Streckblasen aus Rohlingen (2) aus Kunststoff, wobei sich dieser Formboden (7) um eine Mittelachse (X) erstreckt und Folgendes umfasst:
- eine Formwand (8), die aus einem einzelnen Block geformt ist und die eine Formungsfläche (9) definiert;
- eine Kavität (10), die im Inneren der Formwand (8) ausgebildet ist, wobei diese Kavität (10) einen Zentralbereich (11), der der Mittelachse (X) des Formbodens (7) benachbart ist, einen Randbereich (12), der von der Mittelachse (X) beabstandet ist, und einen Medianbereich (13) zwischen dem Zentralbereich (11) und dem Randbereich (12) aufweist;
- eine Zentralleitung (18) zur Versorgung der Kavität (10) mit Wärmeübertragungsfluid, die durch eine oder mehrere Zentralöffnung(en) (20) im Zentralbereich (11) mündet;
- mindestens eine Leitung (19) zur Ableitung des Wärmeübertragungsfluids aus der Kavität (10), in welche der Randbereich (12) mündet;
wobei dieser Formboden (7) **dadurch gekennzeichnet ist, dass** er eine Abzweigleitung (24) umfasst, die die Zentralleitung (18) unter Umgehung des Zentralbereichs (11) direkt mit dem Medianbereich (13) der Kavität (10) verbindet.

2. Formboden (7) nach Anspruch 1, **dadurch gekennzeichnet, dass** die Zentralversorgungsleitung (18) radial von einer Seitenwand (23) begrenzt ist, durch welche sich die Abzweigleitung (24) durch eine Innenmündung (25) in die Zentralleitung (18) öffnet.

3. Formboden (7) nach Anspruch 1 oder 2, **dadurch gekennzeichnet, dass** er mit Versteifungselementen (26) versehen ist, die die Innenmündung (25) der Abzweigleitung (24) aussteifen.

4. Formboden (7) nach Anspruch 3, **dadurch gekennzeichnet, dass** jedes Versteifungselement (26) im horizontalen Querschnitt ein Flügelprofil aufweist, das radial orientiert ist.

5. Formboden (7) nach einem der vorhergehenden Ansprüche, wobei die Kavität (10) von einer Innenhaut (14), die die Formungsfläche (9) definiert, und von einer Außenhaut (15) begrenzt ist.

6. Formboden (7) nach Anspruch 5, wobei die Innenhaut (14) eine Dicke zwischen 0,2 mm und 5 mm aufweist.

7. Formboden (7) nach Anspruch 5 oder 6, der ein Netz aus Stützen (16) umfasst, die die Innenhaut (14) und die Außenhaut (15) verbinden.

8. Formboden (7) nach einem der vorhergehenden Ansprüche, wobei die Formungsfläche (9) ein Relief mit dem Abdruck eines blütenblattförmigen Behälters aufweist und einen Wechsel von Rippen (30) und hohlförmigen Reserven (31) definiert.

9. Formboden (7) nach Anspruch 8, wobei die Abzweigleitung (24) Folgendes umfasst:
- primäre Abzweigkanäle (24A), die jeweils die Zentralversorgungsleitung (18) mit einem Abschnitt des Medianbereichs (13) der Kavität (10) in Verbindung bringen, der sich an einer hohlförmigen Reserve (31) befindet;
- sekundäre Abzweigkanäle (24B), die jeweils die Zentralversorgungsleitung (18) mit einem Abschnitt des Medianbereichs (13) der Kavität (10) in Verbindung bringen, der sich an einer Rippe (30) befindet.

10. Formboden (7) nach Anspruch 9, wobei die primären Kanäle (24A) und die sekundären Kanäle (24B) abwechselnd um die Zentralversorgungsleitung (18) herum angeordnet sind.

11. Formboden (7) nach einem der Ansprüche 1 bis 7, wobei die Abzweigleitung (24) in Form einer einheitlichen Leitung vorliegt, die die Mittelachse (X) umgibt.

12. Form (1) zur Fertigung von Behältern aus Rohlingen (2) aus Kunststoff, die mindestens einen Formboden (7) nach einem der vorhergehenden Ansprüche umfasst.

## Claims

1. Mold bottom (**7**) intended for a mold (**1**) for manufacturing containers by blow-molding or stretch-blow-molding from blanks (**2**) made of plastics material, this mold bottom (**7**) extending about a central axis (**X**) and comprising:
- a molding wall (**8**), which is formed as a single block and defines a molding surface (**9**);
- a cavity (**10**) formed on the inside of the molding wall (**8**), this cavity (**10**) having a central zone (**11**) situated in the vicinity of the central axis (**X**) of the mold bottom (**7**), a peripheral zone (**12**), situated at a distance from the central axis (**X**), and an intermediate median zone (**13**) between the central zone (**11**) and the peripheral zone (**12**);
- a central duct (**18**) for feeding heat transfer fluid to the cavity (**10**), which leads into the central zone (**11**) through one or more central opening(s) (**20**);
- at least one duct (**19**) for evacuating the heat transfer fluid from the cavity (**10**), into which the peripheral zone (**12**) leads;
this mold bottom (**7**) being **characterized in that** it comprises a bypass (**24**), which places the central duct (**18**) in direct communication with the median zone (**13**) of the cavity (**10**), bypassing the central zone (**11**).

2. Mold bottom (**7**) according to Claim 1, **characterized in that** the central feed duct (**18**) is delimited radially by a lateral wall (**23**), through which the bypass (**24**) opens, by way of an inner mouth (**25**), into the central duct (**18**).

3. Mold bottom (**7**) according to Claim 1 or Claim 2, **characterized in that** it is provided with stiffeners (**26**) that brace the inner mouth (**25**) of the bypass (**24**).

4. Mold bottom (**7**) according to Claim 3, **characterized in that** each stiffener (**26**) has a fin profile, oriented radially, in horizontal section.

5. Mold bottom (**7**) according to one of the preceding claims, wherein the cavity (**10**) is delimited by an internal skin (**14**), which defines the molding surface (**9**), and by an external skin (**15**).

6. Mold bottom (**7**) according to Claim 5, wherein the internal skin (**14**) has a thickness of between 0.2 mm and 5 mm.

7. Mold bottom (**7**) according to Claim 5 or Claim 6, which comprises a network of struts (**16**) that connect the internal skin (**14**) and the external skin (**15**).

8. Mold bottom (**7**) according to one of the preceding claims, wherein the molding surface (**9**) has a relief with the imprint of a petaloid container, and defines an alternation of ribs (**30**) and recessed indentations (**31**).

9. Mold bottom (**7**) according to Claim 8, wherein the bypass (**24**) comprises:
- primary bypass channels (**24A**) that each place the central feed duct (**18**) in communication with a part of the median zone (**13**) of the cavity (**10**) that is situated in the region of a recessed indentation (**31**);
- secondary bypass channels (**24B**) that each place the central feed duct (**18**) in communication with a part of the median zone (**13**) of the cavity (**10**) that is situated in the region of a rib (**30**).

10. Mold bottom (**7**) according to Claim 9, wherein the primary channels (**24A**) and the secondary channels (**24B**) are disposed in alternation about the central feed duct (**18**).

11. Mold bottom (**7**) according to one of Claims 1 to 7, wherein the bypass (**24**) is in the form of an individual duct surrounding the central axis (**X**).

12. Mold (**1**) for manufacturing containers from blanks (**2**) made of plastics material, which comprises at least one mold bottom (**7**) according to one of the preceding claims.
